(19) Europäisches Patentamt
European Patent Office
Office européen des brevets

(11) **EP 2 936 196 B1**

(12) **EUROPÄISCHE PATENTSCHRIFT**

(45) Veröffentlichungstag und Bekanntmachung des Hinweises auf die Patenterteilung:
**26.05.2021 Patentblatt 2021/21**

(21) Anmeldenummer: **13824313.4**

(22) Anmeldetag: **18.12.2013**

(51) Int Cl.:
*G01S 13/34* (2006.01)     *G01S 13/931* (2020.01)
*G01S 7/35* (2006.01)

(86) Internationale Anmeldenummer:
**PCT/EP2013/077040**

(87) Internationale Veröffentlichungsnummer:
**WO 2014/095965 (26.06.2014 Gazette 2014/26)**

(54) **VERFAHREN ZUM EINSTELLEN EINER DETEKTIONSSCHWELLE FÜR EIN EMPFANGSSIGNAL EINES FREQUENZMODULATIONS-DAUERSTRICH-RADARSENSORS EINES KRAFTFAHRZEUGS ABHÄNGIG VOM RAUSCHPEGEL, RADARSENSOR UND KRAFTFAHRZEUG**

METHOD FOR SETTING A DETECTION THRESHOLD FOR A RECEIVED SIGNAL OF A FREQUENCY-MODULATED CONTINUOUS WAVE RADAR SENSOR OF A MOTOR VEHICLE ON THE BASIS OF THE NOISE LEVEL, RADAR SENSOR AND MOTOR VEHICLE

PROCÉDÉ POUR LE RÉGLAGE D'UN SEUIL DE DÉTECTION POUR UN SIGNAL DE RÉCEPTION D'UN CAPTEUR RADAR À ONDE CONTINUE À MODULATION DE FRÉQUENCE D'UN VÉHICULE AUTOMOBILE DÉPENDANT DU NIVEAU DE BRUIT, CAPTEUR DE RADAR ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2012 DE 102012024999**

(43) Veröffentlichungstag der Anmeldung:
**28.10.2015 Patentblatt 2015/44**

(73) Patentinhaber: **Valeo Schalter und Sensoren GmbH**
**74321 Bietigheim-Bissingen (DE)**

(72) Erfinder: **LUEBBERT, Urs**
**74321 Bietigheim-Bissingen (DE)**

(74) Vertreter: **Withopf, Kristina et al**
**Valeo Schalter und Sensoren GmbH**
**CDA-IP**
**Laiernstraße 12**
**74321 Bietigheim-Bissingen (DE)**

(56) Entgegenhaltungen:
**EP-A1- 0 642 190         US-A- 5 508 706**
**US-A- 5 633 642         US-A- 5 929 802**
**US-A1- 2007 103 360**

**Beschreibung**

Die Erfindung betrifft ein Verfahren zum Einstellen einer Detektionsschwelle, mit welcher ein Empfangssignal eines Frequenzmodulations-Dauerstrich-Radarsensors eines Kraftfahrzeugs im Hinblick auf die Detektion eines Zielobjekts in der Umgebung des Kraftfahrzeugs verglichen wird. In aufeinanderfolgenden Messzyklen sendet der Radarsensor jeweils ein Radarsignal in einen Erfassungsbereich aus und empfängt ein in dem Erfassungsbereich reflektiertes Radarsignal als Empfangssignal. In jedem Messzyklus wird zu dem jeweiligen Empfangssignal ein Frequenzspektrum bestimmt, dessen einzelne Frequenzbins jeweils einer Signalhöhe, insbesondere der Leistung des Empfangssignals, in einer Entfernungsauflösungszelle des Radarsensors entsprechen. In jedem Messzyklus wird die Detektionsschwelle individuell jeweils für eine Untermenge aus mindestens einem Frequenzbin eingestellt, und zur Einstellung der Detektionsschwelle für die jeweils aktuelle Untermenge der Frequenzbins wird ein Rauschpegel des Frequenzspektrums bestimmt. Die Detektionsschwelle wird dann abhängig von dem Rauschpegel eingestellt, etwa durch Multiplikation des Rauschpegels mit einem vorgegebenen Faktor. Die Erfindung betrifft außerdem einen Frequenzmodulations-Dauerstrich-Radarsensor für ein Kraftfahrzeug, wie auch ein Kraftfahrzeug mit einem solchen Radarsensor.

Radarsensoren für Kraftfahrzeuge (Automotive Radar Sensors) sind bereits Stand der Technik und werden beispielsweise bei einer Frequenz von ca. 24 GHz oder ca. 79 GHz betrieben. Radarsensoren dienen im Allgemeinen zur Detektion von Zielobjekten in der Umgebung des Kraftfahrzeugs und unterstützen den Fahrer beim Führen des Kraftfahrzeugs in vielfältiger Hinsicht. Das Interesse gilt vorliegend insbesondere einem Totwinkelerkennungssystem (Blind Spot Warning), mittels welchem der Fahrer vor der Präsenz von Zielobjekten im Totwinkelbereich des Kraftfahrzeugs gewarnt wird.

Radarsensoren messen einerseits den Abstand zwischen dem Zielobjekt und dem Fahrzeug. Sie messen andererseits auch sowohl die Relativgeschwindigkeit zum Zielobjekt als auch den sogenannten Zielwinkel, d.h. einen Winkel zwischen einer gedachten Verbindungslinie zum Zielobjekt und einer Referenzlinie, etwa der Fahrzeuglängsachse oder einer senkrecht zur vorderen Fläche des Sensors verlaufenden Radarachse. Mit Hilfe eines Radarsensors kann folglich die jeweils aktuelle Position des Zielobjekts relativ zum Fahrzeug bestimmt werden, und das Zielobjekt kann in dem Erfassungsbereich des Radarsensors verfolgt werden, d.h. die relative Position des Zielobjekts kann über eine Vielzahl von Messzyklen des Radarsensors hinweg fortlaufend bestimmt werden. Das "Tracking" gelingt unter der Voraussetzung, dass die an dem Zielobjekt detektierten Reflexionspunkte über die Messzyklen hinweg stabil bleiben.

Radarsensoren werden üblicherweise hinter dem Stoßfänger platziert, beispielsweise in den jeweiligen Eckbereichen des hinteren Stoßfängers. Zur Detektion des Zielobjektes sendet der Radarsensor ein Sendesignal (elektromagnetische Wellen) aus, welches dann an dem zu detektierenden Zielobjekt reflektiert und als Radarecho durch den Radarsensor empfangen wird. Es geht vorliegend insbesondere um den sogenannten Frequenzmodulations-Dauerstrich-Radarsensor ("Frequency Modulated Continuous Wave Radar" oder "FMCW Radar"), bei welchem das ausgesendete Signal eine Sequenz ("Burst") von frequenzmodulierten Chirpsignalen umfasst, welche eines nach dem anderen ausgesendet werden. Entsprechend beinhaltet auch das Empfangssignal des Radarsensors eine solche Vielzahl von Chirpsignalen, welche im Hinblick auf die oben genannten Messgrößen verarbeitet und ausgewertet werden. Im Allgemeinen kann mindestens ein Chirpsignal ausgesendet werden. Das Empfangssignal wird dabei zunächst in das Basisband herabgemischt und anschließend mittels eines Analog-Digital-Konverters in ein digitales Empfangssignal mit einer Vielzahl von Abtastwerten umgewandelt und FFT-transformiert (Fast Fourier Transformation). Die Abtastwerte werden dann mittels einer elektronischen Recheneinrichtung (digitaler Signalprozessor) im Zeitbereich und/oder im Frequenzbereich verarbeitet.

Mit einem Radarsensor wird in horizontaler Richtung typischerweise ein relativ breiter azimutaler Winkelbereich erfasst, der sogar 150° betragen kann. Der Radarsensor weist also einen relativ großen azimutalen Erfassungswinkel auf, so dass das Sichtfeld bzw. der Erfassungsbereich des Radarsensors in Azimutrichtung entsprechend breit ist. Der azimutale Erfassungswinkel ist in der Regel bezüglich einer senkrecht zur vorderen Sensorfläche verlaufenden Radarachse symmetrisch, so dass der azimutale Erfassungswinkel von beispielsweise -75° bis +75° bezüglich der Radarachse bemessen wird. Dieser azimutale Erfassungsbereich kann in kleinere Teilbereiche unterteilt sein, welche einer nach dem anderen durch den Radarsensor bestrahlt bzw. erfasst werden. Zu diesem Zwecke wird beispielsweise die Hauptkeule der Sendeantenne elektronisch in Azimutrichtung verschwenkt, beispielsweise nach dem Phase-Array-Prinzip. Die Empfangsantenne kann in diesem Falle in Azimutrichtung eine Empfangscharakteristik aufweisen, mit welcher der gesamte azimutale Erfassungsbereich abgedeckt wird. Ein solcher Radarsensor ist beispielsweise aus dem Dokument DE 10 2009 057 191 A1 bekannt. Ein weiterer Radarsensor ist aus dem Dokument US 2011/0163909 als bekannt zu entnehmen.

Im Patent US 5,633,642 ist ein Radargerät, das nach dem Frequenzmodulations-Dauerstrich-Prinzip arbeitet, offenbart.

In der EP 0 642 190 A1 ist ein Radargerät offenbart, das Entfernungszellen bildet und auf den einzelnen Entfernungszellen zugeordnete Werte Schwellwerte anwendet.

Im Patent US 5,508,706 ist ein Radargerät beschriebenen, das eine Vorrichtung zum Berechnen adaptiver Schwellwerte aufweist, wobei die Schwellwerte durch Mittelung über mehrere Entfernungszellen gebildet werden.

Das Patent US 5,929,802 offenbart ein Radargerät für Fahrzeuge mit einem auf Schwellwerten basierenden Detektionsalgorithmus.

US 2007/0103360 A1 beschreibt ein Radar mit einem auf Schwellwerten basierenden Detektionsalgorith mus.

Mit Hilfe eines Radarsensors kann also auch der Totwinkelbereich eines Kraftfahrzeugs überwacht und der Fahrer gegebenenfalls gewarnt werden. Die Funktionalität der Totwinkelüberwachung beruht im Stand der Technik auf der genannten Zielverfolgung: Der Radarsensor detektiert zunächst das Zielobjekt, etwa ein anderes Fahrzeug, und verfolgt dieses Zielobjekt in dem Erfassungsbereich. Tritt das Zielobjekt - etwa beim Überholen - in einen vorgegebenen Warnbereich, der dem Totwinkelbereich entspricht, wird ein Warnsignal im Kraftfahrzeug ausgegeben. Der Fahrer wird somit über die Präsenz des Zielobjekts im Totwinkelbereich informiert. Um das Zielobjekt über eine Vielzahl von Messzyklen des Radarsensors hinweg verfolgen zu können, ist es nötig, zu ein und demselben Zielobjekt eine ausreichende Anzahl von Rohdetektionen zu erhalten. Dies bedeutet, dass ein in einem bestimmten Messzyklus detektierter Reflexionspunkt des Zielobjekts auch in einem darauffolgenden Messzyklus detektiert werden muss. Eine stabile Verfolgung des Zielobjekts bedeutet also mit anderen Worten, dass die Detektionen jeweils von einem Reflexionspunkt des Zielobjekts stammen, der zwischen aufeinanderfolgenden Messzyklen in seiner Entfernung und seinem Winkel stabil bleibt. Es erfolgt somit eine Zuordnung von in unterschiedlichen Messzyklen detektierten Reflexionspunkten zueinander.

Die Detektion von Reflexionspunkten alleine erfolgt typischerweise im Frequenzbereich. Das Empfangssignal wird dazu der Fourier-Transformation, nämlich der FFT (Fast Fourier Transformation), unterzogen, und es wird ein Frequenzspektrum des bereits herab gemischten Empfangssignals bestimmt. Die Reflexionspunkte von Zielobjekten sind durch Spitzen im Empfangsspektrum repräsentiert. Bei der FFT werden für eine Vielzahl von Frequenzwerten (und genauer gesagt von kleinen Frequenzintervallen) Leistungswerte des Empfangssignals bestimmt. Diese Leistungswerte sind auch unter der Bezeichnung "FFT-Bin" bzw. "Frequenzbin" bekannt. Die FFT liefert also eine Vielzahl von Frequenzbins, welche jeweils einen Signalwert für einen bestimmten Frequenzbereich bzw. einen bestimmten Frequenzwert repräsentieren. Weil bei einem FMCW-Radar die Frequenz des Empfangssignals auch von der Entfernung des Zielobjekts abhängt, ist jeder Frequenzbin jeweils einer Entfernungsauflösungszelle zugeordnet. Die Größe einer Entfernungsauflösungszelle definiert dabei die Auflösung des Radarsensors, mit welcher die Entfernung des Zielobjekts bestimmt werden kann.

Die Zielechos und das Messrauschen überlagern sich additiv. Das Messrauschen ist frequenzabhängig und steigt mit höheren Frequenzen. Auch durch sogenannte "Clutter", also unerwünschte Reflexionen an Boden, Vegetation und ausgedehnten Infrastrukturobjekten überlagern sich zusätzliche Störsignale frequenzabhängig dem Nutzsignal. Um die Detektion eines Zielechos im Empfangssignal zu ermöglichen, werden die Frequenzbins, also die Signalwerte, mit einer Detektionsschwelle verglichen. Die im Empfangssignal vorhandenen Signalspitzen bzw. Zielechos werden mit Hilfe eines Schwellwertdetektors detektiert. Liegt die Höhe des aktuell untersuchten Frequenzbins über der Detektionsschwelle, findet eine Detektion in der zugeordneten Entfernungsauflösungszelle statt. Die Detektionsschwelle wird im Betrieb des Radarsensors adaptiv eingestellt, und zwar beispielsweise nach dem CFAR-Verfahren (Constant False Alarm Rate). Gemäß diesem Verfahren wird die Detektionsschwelle derart angepasst, dass sie um einen vorgegebenen Faktor stets oberhalb des Rauschpegels liegt. Ist kein Zielobjekt vorhanden, detektiert der Detektor immer dann fälschlicherweise ein Ziel, wenn das Rauschsignal bzw. Störsignal oberhalb der Detektionsschwelle liegt. Wird die Detektionsschwelle relativ zur Störleistung eingestellt, ergibt sich eine konstante Falschalarmrate, d.h. eine konstante Wahrscheinlichkeit dafür, dass das momentane Störsignal die Detektionsschwelle überschreitet.

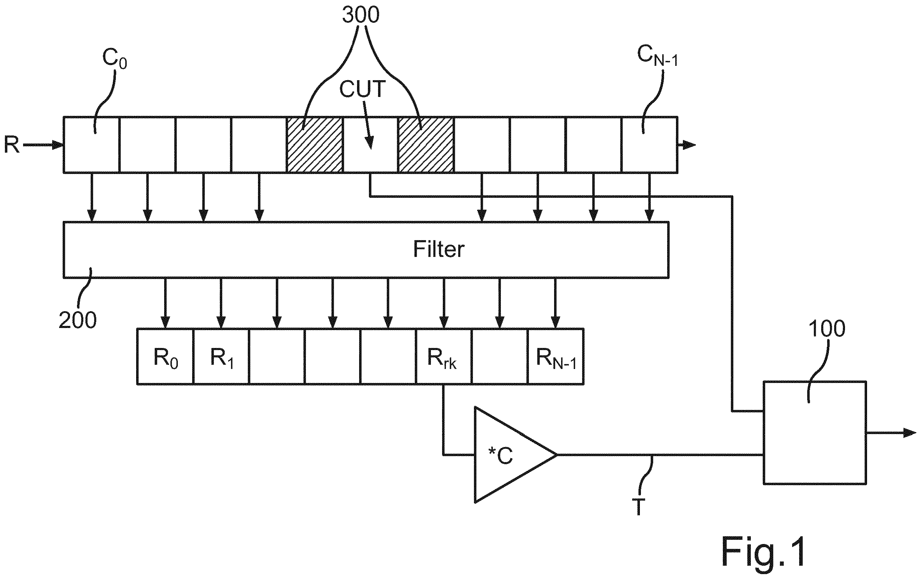

Die Detektionsschwelle wird für jeden Frequenzbin einzeln berechnet. Zu diesem Zwecke kann beispielsweise das CA-CFAR-Verfahren angewendet werden, bei welchem für jeden Frequenzbin ein Rauschpegel für die Einstellung der Detektionsschwelle herangezogen wird, der aus den benachbarten Frequenzbins arithmetisch gemittelt wird. Eine andere Methode (OS-CFAR) geht dahin, das sogenannte Rangordnungsfilter einzusetzen, bei welchem ein festgelegter Rang als Rauschpegel ausgewählt wird. Ein derartiges Rangordnungsfilter ist in schematischer Darstellung in Fig. 1 gezeigt. Der FFT-Algorithmus liefert die Frequenzbins R, welche jeweils einer Entfernungsauflösungszelle Co bis $C_{N-1}$ zugeordnet werden. Momentan wird die Zelle unter Test CUT (Cell Under Test) untersucht. Der Frequenzbin R dieser Zelle CUT wird einem Komparator 100 zugeführt, welchem andererseits auch die Detektionsschwelle T zugeführt wird, welche individuell für die CUT bestimmt wird. Zur Bestimmung der Detektionsschwelle T ordnet das Rangordnungsfilter 200 die Frequenzbins $R_0$ bis $R_{N-1}$ der Größe nach. Ein vorbestimmter Rang, nämlich der Frequenzbin $R_{rk}$, wird dann als Rauschpegel für die CUT ausgewählt und mit einem vorgegebenen Faktor c multipliziert. Das Ergebnis stellt die aktuelle Detektionsschwelle T dar. Der Frequenzbin $R_{rk}$ wird also als Rauschpegel verwendet, welcher die Basis für die Festlegung der Detektionsschwelle T für die CUT darstellt. Bei der Bestimmung des Rauschpegels $R_{rk}$ bleiben die Frequenzbins R aus den zur CUT unmittelbar benachbarten Entfernungsauflösungszellen 300 unberücksichtigt. Diese Zellen 300 stellen Schutzzellen bzw. sogenannte "Guard Cells" dar. Ein in der CUT vorhandenes Zielecho erstreckt sich nämlich typischerweise auch auf die unmittelbar benachbarten Zellen 300, so dass diese Zellen 300 nicht zur Bestimmung des Rauschpegels herangezogen werden sollen.

Der Rauschpegel $R_{rk}$ wird im Stand der Technik also durch Filterung der Frequenzbins über die Entfernung bzw. über die Entfernungsauflösungszellen eines einzelnen Messzyklus geschätzt. Eine solche Vorgehensweise hat sich - insbesondere für einen Entfernungsnahbereich - als nachteilig erwiesen: Wie bereits ausgeführt, ist die Rauschleistung im Entfernungsnahbereich (in den ersten vorderen Entfernungsauflösungszellen) aufgrund der Eigenschaften des Sensors und der Radarmessung, insbesondere aufgrund der entfernungsabhängigen und damit frequenzabhängigen Verstärkung des Empfangssignals, wesentlich niedriger als bei größeren Entfernungen bzw. in den weiteren Entfernungszellen. Werden für die Schätzung des Rauschpegels für die ersten Entfernungsauflösungszellen die Frequenzbins aus den weiteren Entfernungsauflösungszellen mit einbezogen, ergibt sich entsprechend eine erhöhte Detektionsschwelle für den Entfernungsnahbereich. Dies wiederum führt zu einer verschlechterten Empfindlichkeit des Radarsensors im Nahbereich im Vergleich zu größeren Entfernungen. Diese Empfindlichkeit soll insbesondere in den ersten fünf Entfernungsauflösungszellen verbessert werden.

Aufgrund der verringerten Empfindlichkeit des Radarsensors im Nahbereich kann es nämlich zu einem kurzzeitigen Funktionsausfall beim Überwachen des Totwinkelbereiches kommen. Ein bereits aktivierter Alarm kann z.B. kurzzeitig unterbrochen werden, obwohl sich im Totwinkelbereich weiterhin ein Zielobjekt befindet. Dies gilt insbesondere für große LKWs ohne den Unterschutz, bei denen keine oder nur schwache Reflexionspunkte im mittleren Längsbereich des LKWs vorhanden sind.

Und umgekehrt, werden die Frequenzbins aus den nahen Entfernungszellen zur Bestimmung der Schwelle für die weiteren Entfernungszellen verwendet, kann es vorkommen, dass die Schwelle zu niedrig eingestellt wird und somit Scheinechos detektiert werden.

Es ist Aufgabe der Erfindung, eine Lösung aufzuzeigen, wie bei einem Verfahren der eingangs genannten Gattung die Empfindlichkeit des Radarsensors, insbesondere in einem vorgegebenen Entfernungsnahbereich, im Vergleich zum Stand der Technik verbessert werden kann.

Diese Aufgabe wird erfindungsgemäß durch ein Verfahren, durch einen Radarsensor sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Erfindungsgemäß erfolgt die Bestimmung des Rauschpegels für die aktuell untersuchte Untermenge aus zumindest einem Frequenzbin in Abhängigkeit von Frequenzbins benachbarter Dopplerauflösungszellen des Frequenzspektrums. Dieser Aspekt erweist sich insbesondere bei einem Frequenzmodulations-Dauerstrich-Radarsensor, bei welchem als Sendesignal eine Sequenz (Burst) von frequenzmodulierten Chirpsignalen ausgesendet wird. Bei einem solchen Sendesignal (Multiple Chirp Wave Form) kann in jedem Messzyklus zum jeweiligen Empfangssignal in an sich bekannter Weise ein Spektrum in der Entfernung-Doppler-Ebene (Range-Doppler) bestimmt werden, welches für jede Entfernungsauflösungszelle und jede Dopplerauflösungszelle die Signalhöhe des Empfangssignals, insbesondere die Empfangsleistung, angibt. Mit einem solchen zweidimensionalen Spektrum lassen sich die Zielobjekte ohne viel Aufwand sowohl nach Entfernung als auch nach Doppler (Relativgeschwindigkeit) auflösen. Gemäß dem erfindungsgemäßen Aspekt wird nun vorgeschlagen, den Rauschpegel für die aktuelle Entfernungsauflösungszelle nicht aus den Frequenzbins anderer Entfernungsauflösungszellen, sondern aus Frequenzbins einer Vielzahl von Dopplerauflösungszellen, insbesondere der gleichen Entfernungsauflösungszelle bzw. Entfernungsauflösungsspalte, zu bestimmen. Unter einer Dopplerauflösungszelle wird dabei die Auflösung verstanden, mit welcher der Radarsensor die Dopplerverschiebung bzw. die Relativgeschwindigkeit der Zielobjekte bestimmen kann. Wird ein derartiges zweidimensionales Spektrum mit einer Dopplerrichtung und einer Entfernungsrichtung (Range) bestimmt, so beinhaltet jede Entfernungsauflösungszelle eine Vielzahl von Dopplerauflösungszellen - in diesem Fall spricht man von einer Entfernungsauflösungsspalte mit mehreren Dopplerauflösungszellen.

Die Erfindung basiert auf der Idee, den Rauschpegel für die Bestimmung der Detektionsschwelle für die aktuelle Untermenge aus zumindest einem Frequenzbin nicht abhängig von Frequenzbins anderer Entfernungsauflösungszellen, sondern abhängig von Frequenzbins anderer Auflösungszellen (in Dopplerrichtung) im gleichen Entfernungsbereich zu bestimmen. Auf diese Art und Weise wird die Empfindlichkeit des Schwellwertdetektors, insbesondere im Entfernungsnahbereich, verbessert. Die Fehler durch entfernungsabhängige Rauschleistung wirken sich nämlich nicht mehr ungünstig auf die Rauschschätzung aus, denn die Rauschleistung in einer Auflösungszelle, die zu einer größeren Entfernung gehört, hebt nicht die Schätzung der Rauschleistung in einer Auflösungszelle an, die zu einer kleineren Entfernung gehört. Durch Verbesserung der Empfindlichkeit des Radarsensors wird die Funktionalität der Totwinkelüberwachung verbessert, und es kann ein stabiler Alarm bei Präsenz eines Zielobjekts im Totwinkelbereich ausgegeben werden. Die Optimierung der Rauschschätzung und somit der Detektionsschwelle ist folglich für die Detektion von Reflexionspunkten im Nahbereich und damit für die stabile Warnung sehr vorteilhaft.

Gemäß einer Ausführungsform der Erfindung wird zur Einstellung der Detektionsschwelle für die aktuelle Untermenge aus zumindest einem Frequenzbin der Rauschpegel aus Frequenzbins zeitlich vorhergehender Messzyklen bestimmt. Statt den Rauschpegel für die Bestimmung der Detektionsschwelle aus Frequenzbins anderer Entfernungsauflösungszellen desselben Messzyklus (wie in Fig. 1 dargestellt) zu ermitteln, wird der Rauschpegel gemäß diesem Aspekt durch Filterung von Frequenzbins aus den vorhergehenden Messzyklen, insbesondere aus der gleichen Entfernungsauflösungszelle, geschätzt. Es erfolgt also eine Filterung über die Zeit, so dass die Empfangsleistung in der Entfernungsauflösungszelle über mehrere Messzyklen hinweg gefiltert wird.

Bevorzugt wird in jedem Messzyklus die Detektionsschwelle individuell für jede Entfernungsauflösungszelle eingestellt. Die oben genannte Untermenge beinhaltet somit einen einzigen Frequenzbin oder aber - bei einem zweidimensionalen Spektrum mit einer Dopplerrichtung und einer Entfernungsrichtung - alle Frequenzbins, die zu einer gemeinsamen Entfernungsauflösungszelle bzw. (bei einer zweidimensionalen Betrachtung) Entfernungsauflösungsspalte gehören. Durch eine solche Vorgehensweise kann für jede Entfernungsauflösungszelle jeweils die optimale Detektionsschwelle eingestellt werden, so dass auch die Empfindlichkeit des Radarsensors für jede Entfernungsauflösungszelle optimal ist.

Zur Einstellung der Detektionsschwelle für die jeweils aktuelle Untermenge kann der Rauschpegel abhängig von Frequenzbins der gleichen Entfernungsauflösungszelle zeitlich vorhergehender Messzyklen und/oder abhängig von Frequenzbins benachbarter Dopplerauflösungszellen aus der gleichen Entfernungsauflösungszelle (Entfernungsauflösungsspalte) bestimmt werden. Somit erfolgt die Schätzung des Rauschpegels zumindest anhand von Frequenzbins, die zu der gleichen Entfernungsauflösungszelle wie die momentan untersuchte Entfernungsauflösungszelle gehören. Gegebenenfalls können auch Frequenzbins aus den unmittelbar benachbarten Entfernungsauflösungszellen herangezogen werden. Frequenzbins aus Entfernungsauflösungszellen, die weiter weg von der aktuell untersuchten Entfernungsauflösungszelle liegen, bleiben vorzugsweise unberücksichtigt.

Die erfindungsgemäße Bestimmung des Rauschpegels kann in einer Ausführungsform ausschließlich für einen vorgegebenen Entfernungsnahbereich des Radarsensors und somit für eine vorgegebene Anzahl von ersten bzw. nahen Entfernungsauflösungszellen durchgeführt werden. Es ist nämlich der Nahbereich, in welchem die Empfindlichkeit des Radarsensors in erster Linie verbessert werden soll. Somit kann einerseits eine zuverlässige Überwachung des Totwinkelbereiches gewährleistet werden; andererseits kann der Rechenaufwand reduziert werden, wenn für die weiteren Entfernungsauflösungszellen und somit für den Fernbereich die Rauschleistung auf eine andere Art und Weise geschätzt wird. Der vorgegebene Entfernungsnahbereich kann beispielsweise bis zu einer Entfernung von 2 bis 5 m vom Radarsensor reichen.

Gemäß einer alternativen Ausführungsform erfolgt die Bestimmung des Rauschpegels für alle Entfernungsauflösungszellen des Radarsensors. Auf diese Art und Weise kann verhindert werden, dass bei den weiteren Entfernungsauflösungszellen bzw. im Fernbereich eine zu geringe Detektionsschwelle aufgrund der Bestimmung des Rauschpegels anhand von Frequenzbins der näheren Entfernungsauflösungszellen eingestellt wird. Störsignale können somit in den weiteren Entfernungsauflösungszellen besser unterdrückt werden.

In einer Ausführungsform ist vorgesehen, dass zur Einstellung der Detektionsschwelle für die jeweils aktuelle Untermenge bzw. für die jeweils aktuelle Entfernungsauflösungszelle der Rauschpegel durch Filterung, insbesondere durch Mittelung, der Frequenzbins der gleichen Entfernungsauflösungszelle aus einer vorbestimmten Vielzahl von zeitlich unmittelbar vorhandenen Messzyklen bestimmt wird. Durch eine solche Filterung der Frequenzbins aus den vorhergehenden Messzyklen kann der Rauschpegel für die jeweils untersuchte Entfernungsauflösungszelle besonders präzise geschätzt werden. Die Streuung dieser Frequenzbins untereinander ist nämlich deutlich geringer als die Abweichung der Frequenzbins aus anderen Entfernungsauflösungszellen.

Werden zur Bestimmung des Rauschpegels die Frequenzbins aus der gleichen Entfernungsauflösungszelle über die Zeit bzw. über mehrere Messzyklen hinweg gefiltert, insbesondere gemittelt, so muss sichergestellt werden, dass für diese Bestimmung des Rauschpegels bzw. für diese Filterung lediglich Frequenzbins aus denjenigen vorhergehenden Messzyklen verwendet werden, bei denen in der momentan untersuchten Entfernungsauflösungszelle kein Zielecho von einem Zielobjekt detektiert wurde. Während des Betriebs des Radarsensors kann nämlich zwischen zwei Fällen unterschieden werden: Entweder ist in der untersuchten Entfernungsauflösungszelle ein Ziel vorhanden oder nicht. Im normalen Fahrbetrieb wechseln sich diese beiden Fälle ständig ab, allerdings kann einer der Fälle auch für eine längere Zeitdauer erhalten bleiben. Die Rauschleistung für die aktuell untersuchte Entfernungsauflösungszelle kann anhand von Frequenzbins der gleichen Zelle aus vorhergehenden Messzyklen nur dann bestimmt werden, wenn in dieser Zelle in den jeweiligen Messzyklen kein Zielecho vorhanden ist. Somit wird sichergestellt, dass zur Bestimmung des Rauschpegels kein Nutzsignal, sondern lediglich Störsignale herangezogen werden, wie Cluttersignale und das Messrauschen selbst.

Die Überprüfung, ob in der zumindest einen Entfernungsauflösungszelle in den jeweiligen Messzyklen ein Zielecho existiert oder nicht, kann auf verschiedenste Arten vorgenommen werden. Zum einen kann diese Überprüfung messtechnisch vorgenommen werden; zum anderen kann - ergänzend oder alternativ - auf die Existenz eines Zielechos abhängig von einer statistischen Auswertung der Frequenzbins dieser untersuchten Zelle über mehrere Messzyklen hinweg zurückgeschlossen werden: In einer Ausführungsform ist vorgesehen, dass zur Überprüfung, ob in der zumindest einen Entfernungsauflösungszelle ein Zielecho existiert oder nicht, eine Hilfsschwelle für den Frequenzbin dieser Zelle abhängig von einem geschätzten Rauschpegel definiert wird, der in Abhängigkeit von Frequenzbins einer Vielzahl von Entfernungsauflösungszellen innerhalb eines Messzyklus bestimmt wird. Hier wird also die herkömmliche Schwelle definiert, wie sie auch im Stand der Technik (Fig. 1) abhängig von einer Vielzahl von Frequenzbins aus unterschiedlichen Entfernungsauflösungszellen bestimmt wird. Diese Hilfsschwelle wird jedoch nur dazu genutzt, um eine Annahme treffen zu können, ob in den jeweiligen Messzyklen in der untersuchten Entfernungsauflösungszelle ein Echo vorhanden war oder nicht und somit, ob diese Frequenzbins zur Bestimmung der tatsächlichen Detektionsschwelle herangezogen werden können oder nicht. Hier wird also messtechnisch überprüft, ob in den jeweiligen Messzyklen in der untersuchten Entfernungsauflösungszelle ein Zielecho vorhanden ist. Ist kein Zielecho in einem Messzyklus in der untersuchten Zelle vorhanden, so wird der Frequenzbin aus diesem Messzyklus und dieser Zelle für die Bestimmung des aktuellen Rauschpegels herangezogen. Ist die Rauschleistung mit Hilfe des herkömmlichen CFAR-Schwellwertdetektors über eine vorbestimmte Anzahl von Messzyklen hinweg geschätzt worden, kann auf die neue, tatsächliche Detektionsschwelle umgestellt werden.

Ergänzend oder alternativ kann die Bestimmung des Rauschpegels für die Festlegung der tatsächlichen Detektionsschwelle gemäß einer vorbestimmten statistischen Methode erfolgen: Es können Frequenzbins zu der untersuchten Entfernungsauflösungszelle über eine Vielzahl von Messzyklen hinweg abgespeichert und über die Zeit beobachtet und statistisch ausgewertet werden. Gemäß einer vorbestimmten statistischen Methode kann dann auf der Grundlage der abgespeicherten Frequenzbins entschieden werden, wie hoch der Rauschpegel ist. Mit anderen Worten wird die Entfernungsauflösungszelle über eine längere Zeit untersucht, und es wird eine Annahme an die Verteilung der beiden Fälle "ohne Ziel" bzw. "mit Ziel" gemacht. Bei dieser Ausführungsform können zwei verschiedene Methoden vorgesehen sein: Zum einen kann zur Ermittlung der Rauschschätzung ein Rangordnungsfilter über eine Vielzahl von Frequenzbins über die Zeit verwendet werden. Wird die Zielanwesenheitswahrscheinlichkeit beispielsweise mit 50 % angenommen, kann ein Rang in der unteren Hälfte als Rauschleistungsschätzwert ausgewählt werden. Zum anderen kann auch ein Histogramm der Leistungswerte bzw. der Frequenzbins pro Entfernungsauflösungszelle bereitgestellt werden. Es kann für jede Entfernungsauflösungszelle eine Vielzahl von Leistungsintervallen vorgegeben sein, und es kann die Anzahl der Frequenzbins, die in das jeweilige Leistungsintervall fallen, gezählt werden. Für jede Entfernungsauflösungszelle wird also die statistische Verteilung der Leistungswerte erstellt, wobei die Größe dieses Histogramms den Wertebereich und die Genauigkeit der Rauschleistungsschätzung bestimmt. Die Größe ist jedoch unabhängig von der Anzahl der untersuchten Leistungswerte bzw. Messzyklen. Ein derartiges Histogramm kann dann auf unterschiedliche Weise statistisch ausgewertet werden. Beispielsweise kann ein Median aller Werte ermittelt werden, der dann eine Schätzung ähnlich dem Rangordnungsfilter liefert.

Wie bereits ausgeführt, kann zum jeweiligen Empfangssignal ein zweidimensionales Spektrum bestimmt werden, welches für jedes Paar aus Entfernungsauflösungszelle und Dopplerauflösungszelle den Signalwert bzw. den Frequenzbin angibt. Zur Einstellung der Detektionsschwelle für die jeweils aktuelle Untermenge bzw. für den zumindest einen Frequenzbin kann der Rauschpegel abhängig von Frequenzbins aus einer Vielzahl von Dopplerauflösungszellen zumindest in der untersuchten Entfernungsauflösungsspalte bestimmt werden. Diese Ausführungsform beruht auf der Erkenntnis, dass die Rauschleistung über alle Dopplerauflösungszellen innerhalb einer Entfernungsauflösungsspalte (in dem zweidimensionalen Spektrum) gleich ist und sich lediglich über die Entfernung ändert. Die Frequenzbins aus allen Dopplerauflösungszellen einer bestimmten Frequenzauflösungsspalte können somit zur Bestimmung des Rauschpegels in dieser Entfernungsauflösungsspalte herangezogen werden. Dieser Rauschpegel kann dann sogar für die Bestimmung der Detektionsschwelle für alle Frequenzbins aus dieser Entfernungsauflösungsspalte verwendet werden. Dies bedeutet, dass für alle Frequenzbins der Entfernungsauflösungsspalte und somit für alle Dopplerauflösungszellen dieser Spalte eine gemeinsame Detektionsschwelle genutzt werden kann.

Ergänzend oder alternativ kann der Rauschpegel für eine bestimmte Entfernungsauflösungszelle auch abhängig von Frequenzbins aus einer Vielzahl von Dopplerauflösungszellen zumindest einer unmittelbar benachbarten Entfernungsauflösungsspalte bestimmt werden. Somit kann die Anzahl der zur Bestimmung des Rauschpegels verwendeten Frequenzbins und somit auch die Genauigkeit der Bestimmung des Rauschpegels erhöht werden.

Die Bestimmung des Rauschpegels für die Einstellung der Detektionsschwelle für eine bestimmte Entfernungsauflösungszelle kann umfassen, dass die Frequenzbins zeitlich vorhergehender Messzyklen und/oder die Frequenzbins zumindest der benachbarten Dopplerauflösungszellen einem Rangordnungsfilter zugeführt werden, mittels welchem nach einem vorgegebenen Auswahlkriterium einer der Frequenzbins als Rauschpegel ausgewählt wird. Die Rauschleistung kann somit zuverlässig individuell für jede Entfernungsauflösungszelle geschätzt werden. Ergänzend oder alternativ kann -wie bereits ausgeführt - ein Histogramm verwendet werden, mittels welchem der Rauschpegel geschätzt wird.

Die Erfindung betrifft außerdem einen Frequenzmodulations-Dauerstrich-Radarsensor für ein Kraftfahrzeug, der zum Durchführen eines erfindungsgemäßen Verfahrens ausgebildet ist. Ein erfindungsgemäßes Kraftfahrzeug umfasst einen erfindungsgemäßen Radarsensor. Die mit Bezug auf das erfindungsgemäße Verfahren vorgestellten bevorzugten Ausführungsformen und deren Vorteile gelten entsprechend für den erfindungsgemäßen Radarsensor sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert. Es zeigen:

Fig. 1    in schematischer Darstellung einen Rangordnungsfilter zur Festlegung einer Detektionsschwelle gemäß dem Stand der Technik;

Fig. 2    in schematischer Darstellung ein Kraftfahrzeug mit Radarsensoren gemäß einer Ausführungsform der Erfindung;

Fig. 3    in schematischer Darstellung ein zweidimensionales Spektrum eines Empfangssignals;

Fig. 4    in schematischer Darstellung eine andere Betrachtung des zweidimensionalen Spektrums; und

Fig. 5    eine schematische Darstellung zur Erläuterung eines Verfahrens gemäß einer Ausführungsform der Erfindung.

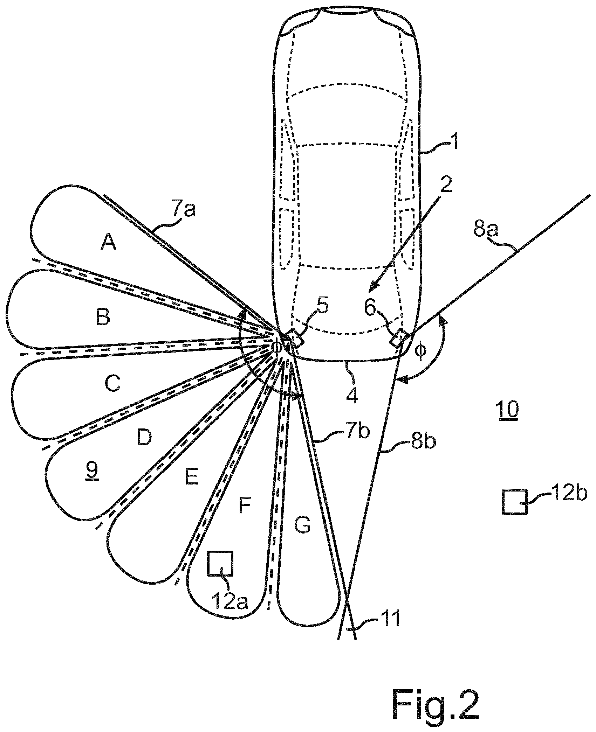

Ein in Fig. 2 dargestelltes Kraftfahrzeug 1 ist beispielsweise ein Personenkraftwagen. Das Kraftfahrzeug 1 umfasst eine Fahrerassistenzeinrichtung 2, welche den Fahrer beim Führen des Kraftfahrzeugs 1 unterstützt. Sie kann beispielsweise ein Totwinkelerkennungssystem (Blind Spot Warning) und/oder ein Spurwechselassistent (Lane Change Assist) und/oder eine Rückwärtsausparkhilfe (Cross Traffic Alert) und/oder ein Türöffnerassistent (Door Opening Assist) und/oder ein Auffahrerkennungssystem (Rear Pre-Crash) sein.

Zur Fahrerassistenzeinrichtung 2 gehören zwei Radarsensoren 5, 6, welche hinter einem hinteren Stoßfänger 4 des Kraftfahrzeugs 1 angeordnet sind. Der erste Radarsensor 5 ist in einem linken hinteren Eckbereich des Kraftfahrzeugs 1 angeordnet, während der zweite Radarsensor 6 in einem rechten hinteren Eckbereich angeordnet ist. Beide Radarsensoren 5, 6 befinden sich hinter dem Stoßfänger 4 und sind somit von außerhalb des Kraftfahrzeugs 1 nicht sichtbar.

Die Radarsensoren 5, 6 sind im Ausführungsbeispiel Frequenzmodulations-Dauerstrich-Radarsensoren (FMCW). Die Radarsensoren 5, 6 besitzen jeweils einen azimutalen Erfassungsbereich $\phi$, welcher in Fig. 2 durch zwei Linien 7a, 7b (für den linken Radarsensor 5) bzw. 8a, 8b (für den rechten Radarsensor 6) begrenzt ist. Der azimutale Erfassungswinkel $\phi$ beträgt beispielsweise 150°. Durch diesen Winkel $\phi$ ist jeweils ein Sichtfeld 9 bzw. 10 des jeweiligen Radarsensors 5, 6 in Azimutrichtung und somit in horizontaler Richtung definiert. Die Sichtfelder 9, 10 können sich auch gegenseitig überlappen, so dass ein Überlappungsbereich 11 gegeben ist.

Jeder Radarsensor 5, 6 beinhaltet eine integrierte Recheneinrichtung beispielsweise in Form eines digitalen Signalprozessors, welcher den Radarsensor 5, 6 ansteuert und außerdem die Empfangssignale verarbeitet und auswertet. Alternativ kann aber auch eine für die beiden Sensoren 5, 6 gemeinsame und externe Recheneinrichtung vorgesehen sein, welche dann die Empfangssignale der beiden Sensoren 5, 6 verarbeiten kann.

In ihren jeweiligen Sichtfeldern 9, 10 können die Radarsensoren 5, 6 fahrzeugexterne Zielobjekte 12a (links) und 12b (rechts) detektieren. Insbesondere können die Radarsensoren 5, 6 die Entfernung der Zielobjekte 12a bzw. 12b von dem jeweiligen Radarsensor 5, 6, sowie jeweils den Zielwinkel und die Relativgeschwindigkeit der Zielobjekte 12a bzw. 12b bezüglich des Kraftfahrzeugs 1 bestimmen - dies sind Messgrößen der Radarsensoren 5, 6.

Bezugnehmend weiterhin auf Fig. 2 kann der Radarsensor 5 - und analog auch der Sensor 6 - verschiedene Teilbereiche A, B, C, D, E, F, G des azimutalen Sichtfeldes 9 nacheinander bestrahlen. Diese Teilbereiche A bis G stellen Winkelbereiche dar, wobei zur Erfassung der Teilbereiche A bis G nacheinander beispielsweise eine Sendekeule der Sendeantenne des Radarsensors 5 elektronisch in Azimutrichtung verschwenkt wird, nämlich nach dem Phase-Array-Prinzip. Die unterschiedlichen Ausrichtungen der Sendekeule sind in Fig. 2 für die unterschiedlichen Teilbereiche A bis G schematisch angedeutet. Die Empfangsantennen des Radarsensors 5 können in Azimutrichtung insgesamt eine breite Empfangscharakteristik aufweisen, mit welcher das gesamte azimutale Sichtfeld 9 abgedeckt wird. Andere Ausgestaltungen können alternativ schmale Empfangswinkelbereiche in Verbindung mit breiten Sendekeulen realisieren.

In Fig. 2 sind der Übersicht halber lediglich die Teilbereiche A bis G des Sichtfeldes 9 des ersten Radarsensors 5 dargestellt. Entsprechend ist hier jedoch auch das horizontale Sichtfeld 10 des zweiten Radarsensors 6 in mehrere Teilbereiche unterteilt. Wenngleich sich die weitere Beschreibung auf die Funktionsweise des ersten Sensors 5 bezieht, entspricht die Funktionsweise des zweiten Sensors 6 der des ersten Sensors 5.

Die Anzahl der Teilbereiche A bis G ist in Fig. 2 lediglich beispielhaft dargestellt und kann je nach Ausführungsform unterschiedlich sein. Im Ausführungsbeispiel sind insgesamt sieben Teilbereiche A bis G vorgesehen, welche einer nach dem anderen durch den Radarsensor 5 beleuchtet werden.

Die Funktionsweise des Radarsensors 5 ist wie folgt: In einem einzelnen Messzyklus des Radarsensors 5 wird die Hauptkeule der Sendeantenne einmal vom Teilbereich A bis hin zum Teilbereich G schrittweise verschwenkt, so dass die Teilbereiche A bis G einer nach dem anderen beleuchtet werden. Für jeden Teilbereich A bis G wird dabei jeweils eine zeitliche Sequenz von frequenzmodulierten Chirpsignalen (chirps) ausgesendet. Zunächst wird eine solche Sequenz von Chirpsignalen für den Teilbereich A ausgesendet. Nach einer vorgegebenen Sendepause wird dann eine Sequenz von Chirpsignalen in den Teilbereich B ausgesendet. Nach einer weiteren vorgegebenen Sendepause wird dann der Teilbereich C bestrahlt usw. Wie aus Fig. 2 hervorgeht, weist der Radarsensor 5 für den Teilbereich G eine größere Reichweite als für die übrigen Teilbereiche A bis F auf. Dies wird dadurch erzielt, dass für den Teilbereich G die ausgesendete Sequenz mehr Chirpsignale als für die übrigen Bereiche A bis F aufweist. Während für die Teilbereiche A bis F beispielsweise 16 Chirpsignale innerhalb der jeweiligen Sequenz ausgesendet werden, werden für den Teilbereich G beispielsweise insgesamt 64 Chirpsignale innerhalb der Sequenz ausgesendet.

Die Detektion der Zielobjekte 12a, 12b erfolgt also individuell und separat für jeden Teilbereich A bis G. Somit ist es möglich, die Zielobjekte 12a, 12b in dem gesamten Sichtfeld 9, 10 zu verfolgen.

Der Radarsensor 5 sendet also in jedem Messzyklus jeweils ein Sendesignal pro "Beam" bzw. pro Teilbereich A bis G aus, wobei jedes Sendesignal eine Sequenz von Chirpsignalen umfasst. Der Einfachheit halber wird nachfolgend lediglich auf einen einzelnen Teilbereich A bis G und somit auf ein einzelnes Sendesignal pro Messzyklus Bezug genommen. Die Auswertung der jeweiligen Empfangssignale kann jedoch für alle Teilbereiche A bis G analog erfolgen.

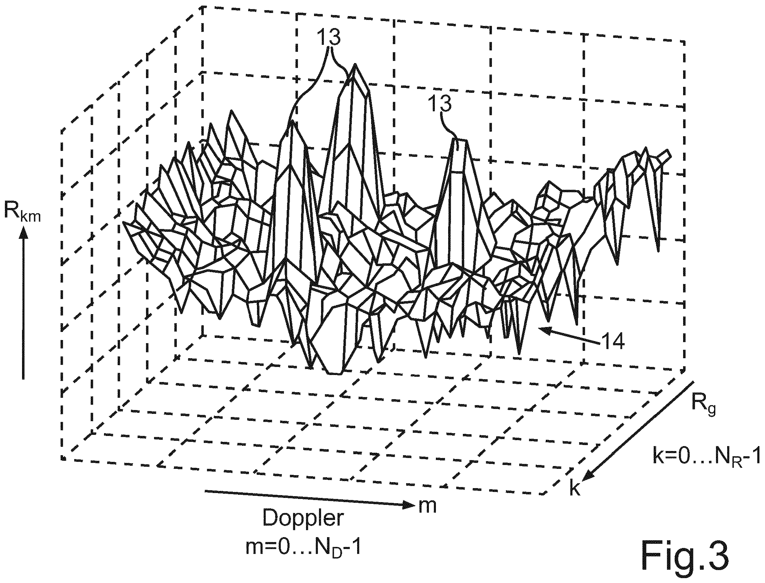

Weil das Sendesignal eine Vielzahl von aufeinanderfolgenden Chirpsignalen umfasst, kann zu dem Empfangssignal ein zweidimensionales Spektrum bestimmt werden (durch FFT), wie es beispielhaft in Fig. 3 schematisch dargestellt ist. Dieses Spektrum gibt Frequenzbins $R_{km}$ bzw. Leistungswerte des Empfangssignals für jede Kombination aus Entfernungsauflösungszellen k und Dopplerauflösungszellen m an. Bei dem Leistungsspektrum gemäß Fig. 3 ist auf der k-Achse die Entfernung Rg (Range) aufgetragen, während auf der m-Achse die Dopplerverschiebung und somit die Relativgeschwindigkeit aufgetragen ist. Mit einem solchen Spektrum können die Zielobjekte 12 einerseits nach der Entfernung vom Radarsensor 5 und andererseits auch nach der Relativgeschwindigkeit aufgelöst werden. Das Spektrum gemäß Fig. 3 beinhaltet beispielhaft drei Zielechos 13, die sich deutlich von dem sogenannten Rauschteppich 14 erheben.

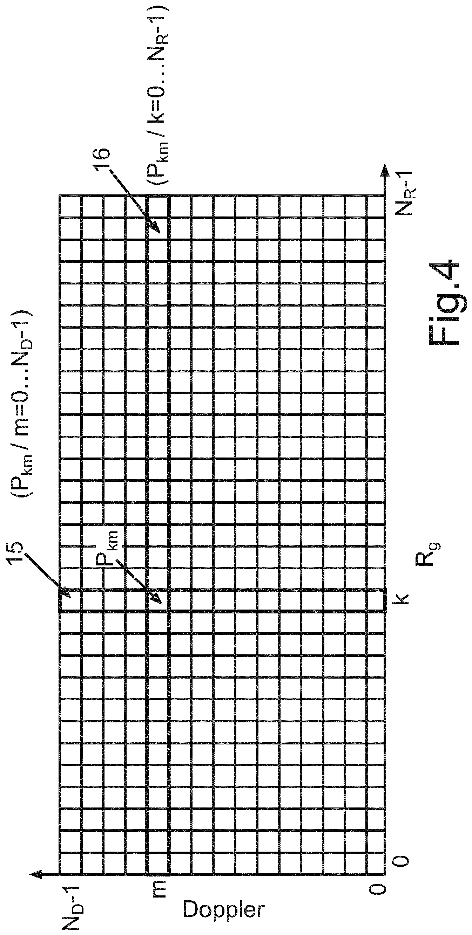

Eine andere Betrachtung des Spektrums ist in Fig. 4 dargestellt. Hier sind die jeweiligen Auflösungszellen m, k näher dargestellt. Auf der einen Achse ist die Dopplerverschiebung "Doppler" aufgetragen; auf der anderen Achse ist die Entfernung Rg aufgetragen. Es gibt insgesamt $N_R$ Entfernungsauflösungszellen des Radarsensors 5, wobei $N_R$ der halben Anzahl von Abtastwerten des Empfangssignals pro Chirpsignal plus Eins entspricht: $N_R = N_{Samples}/2 + 1$. $N_R$ kann beispielsweise 129 betragen. Demgegenüber entspricht die Anzahl der Dopplerauflösungszellen $N_D$ der Anzahl der ausgesendeten Chirpsignale innerhalb eines Sendesignals bzw. pro "Burst" (beispielsweise 16 oder 64 Chirpsignale). Diese Anzahl $N_D$ kann auch für unterschiedliche Teilbereiche A bis G (Fig. 2) unterschiedlich sein, um unterschiedliche Reichweiten z erzielen.

Mit weiterem Bezug auf Fig. 4 beinhaltet eine bestimmte Entfernungsauflösungsspalte 15 insgesamt $N_D$ Dopplerauflösungszellen, während eine bestimmte Dopplerauflösungsspalte 16 insgesamt $N_R$ Entfernungsauflösungszellen umfasst. Eine für die Entfernungsauflösungsspalte 15 und die Dopplerauflösungsspalte 16 gemeinsame Zelle $P_{km}$ weist einen Leistungswert des Empfangssignals bzw. einen Frequenzbin $R_{km}$ auf. Für jede solche Zelle $P_{km}$ wird folglich jeweils ein Frequenzbin $R_{km}$ bestimmt, welcher den Leistungswert des Empfangssignals in dieser Zelle $P_{km}$ angibt.

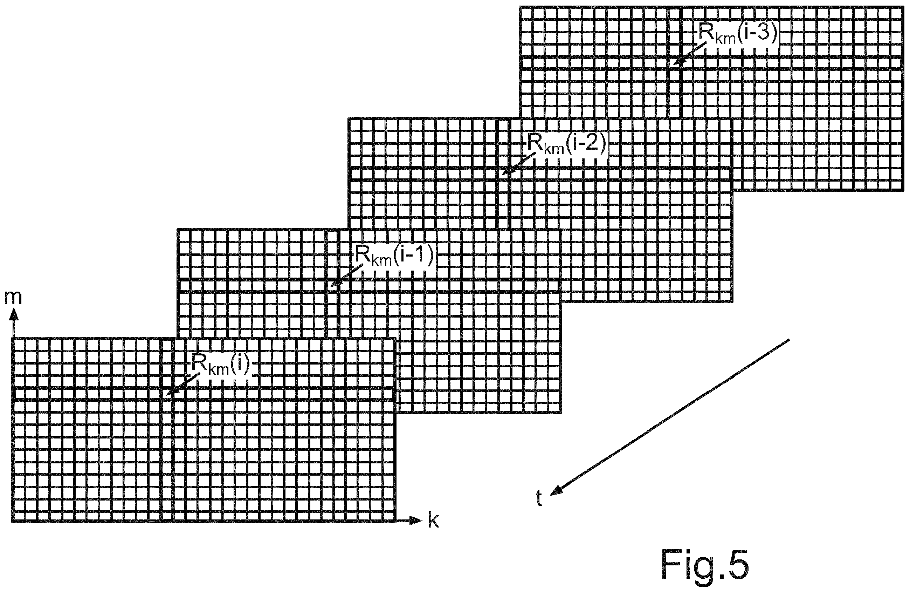

Wird ein derartiges Spektrum zu dem jeweiligen Empfangssignal in allen aufeinanderfolgenden Messzyklen bestimmt, so kommt zusätzlich noch eine zeitliche Dimension hinzu, wie dies in Fig. 5 schematisch dargestellt ist. t bezeichnete dabei die Zeit. In der Zelle $P_{km}$ sind nun in den unterschiedlichen Messzyklen unterschiedliche Frequenzbins $R_{km}(i-3)$ bis $R_{km}(i)$ gegeben. i bezeichnet dabei den aktuellen Messzyklus, während (i-1), (i-2) und (i-3) die drei letzten bzw. vorhergehenden Messzyklen sind.

In dem jeweils aktuellen Messzyklus wird für jede einzelne Entfernungsauflösungsspalte 15 jeweils für alle Dopplerauflösungszellen m = 0 ... $N_{D-1}$ die Rauschleistung bzw. der Rauschpegel geschätzt, in Abhängigkeit von welchem dann die Detektionsschwelle für alle Frequenzbins dieser Entfernungsauflösungsspalte 15 individuell bestimmt wird. Diese Detektionsschwelle wird adaptiv im Betrieb des Radarsensors 5 für jede Entfernungsauflösungsspalte 15 individuell eingestellt. Alternativ kann auch für jede einzelne Zelle $P_{km}$ die Detektionsschwelle individuell eingestellt werden.

Zur Schätzung des Rauschpegels für eine bestimmte Zelle $P_{km}$ können Frequenzbins aus der gleichen Zelle $P_{km}$, jedoch aus den vorhergehenden Messzyklen und/oder Frequenzbins aus den anderen Dopplerauflösungszellen m der gleichen Entfernungsauflösungsspalte 15 genutzt werden. Bevorzugt werden diese beiden Methoden miteinander kombiniert.

Nachfolgend werden verschiedene Beispiele zur Schätzung des Rauschpegels vorgestellt:

Erstes Beispiel:

Gemäß dem ersten Beispiel wird die Rauschleistung für eine bestimmte Zelle $P_{km}$ lediglich anhand von Frequenzbins aus demselben Messzyklus i geschätzt. Zur Schätzung des Rauschpegels werden dabei alle Frequenzbins aus der untersuchten Entfernungsauflösungsspalte 15 und den unmittelbar benachbarten Entfernungsauflösungsspalten genutzt.

Die Auflösungszellen des Spektrums seien $P_{km}$, wobei $k = 0...N_D-1$ und $m = 0...N_R-1$. In einem vorgegebenen Entfernungsnahbereich und somit beispielsweise für die ersten $N_{near}=6$ Entfernungsauflösungsspalten von k = 0 bis k = 5 soll jeweils die Detektionsschwelle und dazu der jeweilige Rauschpegel bestimmt werden. Für Entfernungsauflösungszellen k > 0 und k < $N_{near}=6$ werden die zugeordneten Frequenzbins $R_{k'm'}$ mit k' = k-1...k+1 und m' = $0...N_D-1$ einer Rangordnungsfilterung zugeführt (wie in Fig. 1) und der Rang $R_{rk}$ wird als Rauschpegel ausgewählt.

Für die erste Entfernungsauflösungsspalte k = 0 existiert dabei keine linke benachbarte Spalte, und es werden die Frequenzbins $R_{k'm'}$ mit k' = 0...2 und m' = $0...N_{D-1}$ einer Rangordnungsfilterung zugeführt. Auch hier wird der Rang $R_{rk}$ als Rauschpegel ausgewählt. Die für die jeweilige Entfernungsauflösungsspalte 15 bestimmte Detektionsschwelle kann für alle Dopplerauflösungszellen dieser Spalte gelten. Die Detektionsschwelle ergibt sich z.B. durch Multiplikation des Rauschpegels mit einem vorgegebenen Faktor.

Im ersten Beispiel werden im Rangordnungsfilter für eine bestimmte Entfernungsauflösungsspalte 15 insgesamt 3 x $N_D$ = 48 Werte bzw. Frequenzbins verarbeitet. Als Rang kann beispielsweise rk = 24, also der Median ausgewählt werden.

Zweites Beispiel:

Im zweiten Beispiel werden zusätzlich auch die Frequenzbins aus den vorhergehenden Messzyklen bei der Bestimmung des Rauschpegels berücksichtigt. Die Frequenzbins des Spektrums seien $R_{k,m}(i)$, wobei k = $0...N_D-1$ und m = $0...N_R-1$, und wobei i den aktuellen Messzyklus bezeichnet. Im Entfernungsnahbereich soll nun für die ersten $N_{near}=6$ Entfernungsauflösungsspalten 15 die jeweilige Detektionsschwelle bestimmt und dazu der jeweilige Rauschpegel geschätzt werden.

Für den Messzyklus i und die Entfernungsauflösungsspalte k werden die Frequenzbins $P_{k',m'}(i')$ mit k' = k und m' = $0...N_D-1$ sowie i' = i-9...i und somit alle Frequenzbins aus der untersuchten Entfernungsauflösungsspalte k aus dem momentanen Messzyklus und den neun vorhergehenden Messzyklen einer Rangordnungsfilterung zugeführt. Es wird wiederum der Rang $R_{rk}$ als Rauschleistungsschätzwert für die Entfernungsauflösungsspalte k des Messzyklus i ausgewählt.

Im zweiten Beispiel werden insgesamt 10 x $N_D$ = 160 Werte im Rangordnungsfilter für jede Entfernungsauflösungsspalte 15 verarbeitet. Als Rang wird beispielsweise der Median, also der 80. Wert (rk = 80) ausgewählt.

Drittes Ausführungsbeispiel:

Dieses dritte Ausführungsbeispiel entspricht grundsätzlich dem zweiten Beispiel, wobei statt eines Rangordnungsfilters ein Histogramm angewendet wird. Für den Messzyklus i und die Entfernungsauflösungsspalte k werden die Frequenzbins $R_{k',m'}(i)$ mit k' = k und m' = $0...N_D-1$ verwendet. Diese Frequenzbins $R_{k',m'}(i)$ werden in eine logarithmische Skala (in dB) umgerechnet und in ein Histogramm H eingefügt. Bei diesem Histogramm H wird eine vorbestimmte Anzahl $N_H$ von Leistungsintervallen vorgegeben, nämlich beispielsweise $N_H$ = 256 Leistungsintervalle. Jedes Leistungsintervall kann die Größe von 1dB aufweisen. Zu jedem Leistungsintervall wird jeweils ein Zählerwert $H_0$ bis $H_N$ implementiert, und es wird überprüft, in welches der Leistungsintervalle die jeweiligen Frequenzbins $R_{k',m'}(i)$ fallen. Der zugeordnete Zählerwert $H_0...H_N$ wird jeweils dann inkrementiert, wenn in das zugeordnete Leistungsintervall ein Frequenzbin fällt. Es kann beispielsweise vorgesehen sein, dass der Zählerwert $H_0$ die Leistungswerte im Intervall von 0 dB bis 1 dB zählt, $H_1$ im Intervall von 1 dB bis 2 dB, usw. Dies ergibt insgesamt einen gesamten Wertebereich des Histogramms von 256 dB, was für eine Radarmessung völlig ausreicht. Die Genauigkeit der Rauschleistungsmessung wird durch die Schrittweite auf die Größenordnung von 1 dB eingeschränkt, was für eine Radarmessung ebenfalls ausreichend ist.

Zur Ermittlung des Rauschleistungsschätzwerts für die aktuelle Entfernungsauflösungsspalte k wird dann der Median des Histogramms verwendet: Die kumulative Summe $S_p$ der ersten p Zählerwerte ergibt sich

$$S_p = \sum_{p'=0}^{p} H_{p'}$$

aus: Die gesamte Fläche des Histo-

$$S_{255} = \sum_{p'=0}^{255} H_{p'}$$

gramms beträgt demgegenüber:

Der Algorithmus wird mit p = 0 gestartet. Es wird $S_0 = H_0$ berechnet. So lange $S_p < S_{255}/2$ ist, wird p jeweils um Eins inkrementiert und $S_p = S_{p-1} + H_P$ berechnet. Der Algorithmus wird dann abgebrochen, wenn $S_P \geq S_{255}/2$ ist. Das p-te Leistungsintervall wird als Rauschpegel verwendet.

Um das Histogramm nicht beliebig wachsen zu lassen und damit die bereits veralteten Werte in einem geringen Ausmaß zu berücksichtigen, können alle Werte des Histogramms dann halbiert werden, wenn einer der Zählerwerte, nämlich der größte Zählerwert, eine vorgegebene Zahl, beispielsweise 1000, überschreitet.

Mit anderen Worten wird im dritten Beispiel als Rauschpegel dasjenige Leistungsintervall ausgewählt, dessen Zählerwert gleich oder ein wenig größer als die Summe aller Zählerwerte des Histogramms ist.

**Patentansprüche**

1. Verfahren zum Einstellen einer Detektionsschwelle (T) für ein Empfangssignal eines Frequenzmodulations-Dauerstrich-Radarsensors (5, 6) eines Kraftfahrzeugs (1), bei welchem:

   - in aufeinanderfolgenden Messzyklen (i) des Radarsensors (5, 6) jeweils ein Radarsignal in einen Erfassungsbereich (9, 10) des Radarsensors (5, 6) ausgesendet und ein in dem Erfassungsbereich (9, 10) reflektiertes Radarsignal als Empfangssignal durch den Radarsensor (5, 6) empfangen wird,
   - in jedem Messzyklus (i) ein Frequenzspektrum zu dem jeweiligen Empfangssignal bestimmt wird, wobei einzelne Frequenzbins (R) des Frequenzspektrums jeweils einer Signalhöhe in einer Entfernungsauflösungszelle (k) des Radarsensors (5, 6) entsprechen,

   **dadurch gekennzeichnet, dass**

   - in jedem Messzyklus (i) die Detektionsschwelle (T) individuell jeweils für eine Untermenge aus mindestens einem Frequenzbin (R) eingestellt wird und zur Einstellung der Detektionsschwelle (T) für die jeweils aktuelle Untermenge ein Rauschpegel ($R_{rk}$) des Frequenzspektrums bestimmt und die Detektionsschwelle (T) abhängig von dem Rauschpegel (Rrk) eingestellt wird,

   wobei zur Einstellung der Detektionsschwelle (T) für die aktuelle Untermenge der Rauschpegel ($R_{rk}$) aus Frequenzbins (R) benachbarter Dopplerauflösungszellen (m) des Frequenzspektrums bestimmt wird.

2. Verfahren nach Anspruch 1,
   **dadurch gekennzeichnet, dass**
   zur Einstellung der Detektionsschwelle (T) für die aktuelle Untermenge der Rauschpegel ($R_{rk}$) aus Frequenzbins (R) zeitlich vorhergehender Messzyklen (i) bestimmt wird.

3. Verfahren nach Anspruch 1 oder 2,
   **dadurch gekennzeichnet, dass**
   in jedem Messzyklus (i) die Detektionsschwelle (T) individuell für jede Entfernungsauflösungszelle (k) eingestellt wird.

4. Verfahren nach einem der vorhergehenden Ansprüche,
   **dadurch gekennzeichnet, dass**
   zur Einstellung der Detektionsschwelle (T) für die jeweils aktuelle Untermenge der Rauschpegel ($R_{rk}$) aus Frequenzbins (R) benachbarter Dopplerauflösungszellen (m) aus der gleichen Entfernungsauflösungszelle (k) bestimmt wird.

5. Verfahren nach Anspruch 2,
   **dadurch gekennzeichnet, dass**
   zur Einstellung der Detektionsschwelle (T) für die jeweils aktuelle Untermenge der Rauschpegel ($R_{rk}$) aus Frequenzbins (R) der gleichen Entfernungsauflösungszelle (k) zeitlich vorhergehender Messzyklen (i) bestimmt wird.

6. Verfahren nach einem der vorhergehenden Ansprüche,
   **dadurch gekennzeichnet, dass**
   die Bestimmung des Rauschpegels ($R_{rk}$) ausschließlich für einen vorgegebenen Entfernungsnahbereich ($N_{near}$) des Radarsensors (5, 6) erfolgt.

7. Verfahren nach einem der Ansprüche 1 bis 5,
   **dadurch gekennzeichnet, dass**
   die Bestimmung des Rauschpegels ($R_{rk}$) für alle Entfernungsauflösungszellen (k) erfolgt.

8. Verfahren nach Anspruch 2,
   **dadurch gekennzeichnet, dass**
   zur Einstellung der Detektionsschwelle (T) für die jeweils aktuelle Untermenge der Rauschpegel ($R_{rk}$) durch Filterung, insbesondere durch Mittelung, der Frequenzbins (R) der gleichen Entfernungsauflösungszelle (k) aus einer vorbestimmten Vielzahl von zeitlich unmittelbar vorhergehenden Messzyklen (i) bestimmt wird.

9. Verfahren nach Anspruch 2,
   **dadurch gekennzeichnet, dass**
   zur Bestimmung des Rauschpegels ($R_{rk}$) für die aktuelle Untermenge ausschließlich Frequenzbins (R) aus denjenigen vorhergehenden Messzyklen (i) verwendet werden, bei denen in der zumindest einen Entfernungsauflösungszelle (k) der aktuellen Untermenge kein Zielecho von einem Zielobjekt detektiert wurde.

10. Verfahren nach Anspruch 9,
    **dadurch gekennzeichnet, dass**
    zur Überprüfung, ob in der zumindest einen Entfernungsauflösungszelle (k) ein Zielecho existiert, eine Hilfsschwelle für den Frequenzbin (R) dieser Entfernungsauflösungszelle (k) abhängig von einem ge-

schätzten Rauschpegel ($R_{rk}$) definiert wird, der in Abhängigkeit von Frequenzbins (R) einer Vielzahl von Entfernungsauflösungszellen (k) innerhalb eines Messzyklus (i) bestimmt wird.

**11.** Verfahren nach einem der vorhergehenden Ansprüche,
**dadurch gekennzeichnet, dass**
zur Einstellung der Detektionsschwelle (T) für den zumindest einen Frequenzbin (R) der Rauschpegel ($R_{rk}$) abhängig von Frequenzbins (R) aus einer Vielzahl von Dopplerauflösungszellen (m) zumindest derselben Entfernungsauflösungszelle (k) bestimmt wird.

**12.** Verfahren nach einem der vorhergehenden Ansprüche,
**dadurch gekennzeichnet, dass**
zur Einstellung der Detektionsschwelle (T) für den zumindest einen Frequenzbin (R) der Rauschpegel ($R_{rk}$) abhängig von Frequenzbins (R) aus einer Vielzahl von Dopplerauflösungszellen (m) zumindest einer unmittelbar benachbarten Entfernungsauflösungszelle (k) bestimmt wird.

**13.** Verfahren nach einem der vorhergehenden Ansprüche,
**dadurch gekennzeichnet, dass**
die Bestimmung des Rauschpegels ($R_{rk}$) für die Einstellung der Detektionsschwelle (T) für die jeweils aktuelle Untermenge umfasst, dass die Frequenzbins (R) einem Rangordnungsfilter zugeführt werden, mittels welchem nach einem vorgegebenen Auswahlkriterium einer der Frequenzbins (R) als Rauschpegel ($R_{rk}$) ausgewählt wird.

**14.** Frequenzmodulations-Dauerstrich-Radarsensor (5, 6) für ein Kraftfahrzeug (1), wobei der Radarsensor (5, 6) dazu ausgebildet ist, ein Verfahren nach einem der vorhergehenden Ansprüche durchzuführen.

**15.** Kraftfahrzeug (1) mit einem Radarsensor (5, 6) nach Anspruch 14.

**Claims**

**1.** Method for setting a detection threshold (T) for a received signal of a frequency-modulated continuous-wave radar sensor (5, 6) of a motor vehicle (1), in which:

- in successive measuring cycles (i) of the radar sensor (5, 6) in each case a radar signal is emitted into a capture zone (9, 10) of the radar sensor (5, 6) and a radar signal reflected in the capture zone (9, 10) is received as a received signal by the radar sensor (5, 6),

- in each measuring cycle (i) a frequency spectrum relating to the respective received signal is determined, wherein individual frequency bins (R) of the frequency spectrum each correspond to a signal level in a range-resolution cell (k) of the radar sensor (5, 6), **characterized in that**
- in each measuring cycle (i) the detection threshold (T) is set individually in each case for a subset composed of at least one frequency bin (R) and, in order to set the detection threshold (T) for the respectively current subset, a noise level ($R_{rk}$) of the frequency spectrum is determined and the detection threshold (T) is set as a function of the noise level (Rrk),

wherein, in order to set the detection threshold (T) for the current subset, the noise level ($R_{rk}$) is determined from frequency bins (R) of adjacent Doppler-resolution cells (m) of the frequency spectrum.

**2.** Method according to Claim 1,
**characterized in that**
in order to set the detection threshold (T) for the current subset, the noise level ($R_{rk}$) is determined from frequency bins (R) of temporally preceding measuring cycles (i).

**3.** Method according to Claim 1 or 2,
**characterized in that**
in each measuring cycle (i) the detection threshold (T) is set individually for each range-resolution cell (k).

**4.** Method according to one of the preceding claims,
**characterized in that**
in order to set the detection threshold (T) for the respectively current subset, the noise level ($R_{rk}$) is determined from frequency bins (R) of adjacent Doppler-resolution cells (m) from the same range-resolution cell (k).

**5.** Method according to Claim 2,
**characterized in that**
in order to set the detection threshold (T) for the respectively current subset, the noise level ($R_{rk}$) is determined from frequency bins (R) of the same range-resolution cell (k) of temporally preceding measuring cycles (i).

**6.** Method according to one of the preceding claims,
**characterized in that**
the determination of the noise level ($R_{rk}$) is effected exclusively for a predetermined near-range zone ($N_{near}$) of the radar sensor (5, 6).

**7.** Method according to one of Claims 1 to 5,
**characterized in that**
the determination of the noise level ($R_{rk}$) is effected

for all the range-resolution cells (k).

8. Method according to Claim 2,
**characterized in that**
in order to set the detection threshold (T) for the respectively current subset, the noise level ($R_{rk}$) is determined by filtering, in particular by averaging, the frequency bins (R) of the same range-resolution cell (k) from a predetermined plurality of temporally immediately preceding measuring cycles (i).

9. Method according to Claim 2,
**characterized in that**
in order to determine the noise level ($R_{rk}$) for the current subset, frequency bins (R) from those preceding measuring cycles (i) in which no target echo from a target object has been detected in the at least one range-resolution cell (k) of the current subset are exclusively used.

10. Method according to Claim 9,
**characterized in that**
in order to check whether a target echo exists in the at least one range-resolution cell (k), an auxiliary threshold for the frequency bin (R) of this range-resolution cell (k) is defined as a function of an estimated noise level ($R_{rk}$), which is determined as a function of frequency bins (R) of a plurality of range-resolution cells (k) within a measuring cycle (i).

11. Method according to one of the preceding claims,
**characterized in that**
in order to set the detection threshold (T) for the at least one frequency bin (R), the noise level ($R_{rk}$) is determined as a function of frequency bins (R) from a plurality of Doppler-resolution cells (m) of at least the same range-resolution cell (k).

12. Method according to one of the preceding claims,
**characterized in that**
in order to set the detection threshold (T) for the at least one frequency bin (R), the noise level ($R_{rk}$) is determined as a function of frequency bins (R) from a plurality of Doppler-resolution cells (m) of at least one immediately adjacent range-resolution cell (k).

13. Method according to one of the preceding claims,
**characterized in that**
the determination of the noise level ($R_{rk}$) for setting the detection threshold (T) for the respectively current subset comprises the frequency bins (R) being fed to a rank-order filter, by means of which one of the frequency bins (R) is selected as noise level ($R_{rk}$) in accordance with a predetermined selection criterion.

14. Frequency-modulated continuous-wave radar sensor (5, 6) for a motor vehicle (1), wherein the radar sensor (5, 6) is designed to implement a method according to one of the preceding claims.

15. Motor vehicle (1) with a radar sensor (5, 6) according to Claim 14.

## Revendications

1. Procédé permettant de régler un seuil de détection (T) pour un signal de réception d'un capteur radar à onde continue modulée en fréquence (5, 6) d'un véhicule automobile (1), dans lequel :

   - dans des cycles de mesure (i) successifs du capteur radar (5, 6), respectivement un signal radar est émis dans une zone de capture (9, 10) du capteur radar (5, 6), et un signal radar réfléchi dans la zone de capture (9, 10) est reçu par le capteur radar (5, 6) comme un signal de réception,
   - dans chaque cycle de mesure (i), un spectre de fréquence est déterminé pour le signal de réception respectif, des compartiments de fréquence (R) individuels du spectre de fréquence correspondant respectivement à une hauteur de signal dans une cellule de résolution en distance (k) du capteur radar (5, 6), **caractérisé en ce que**
   - dans chaque cycle de mesure (i), le seuil de détection (T) est réglé individuellement, respectivement pour un sous-ensemble composé d'au moins un compartiment de fréquence (R), et pour le réglage du seuil de détection (T) pour le sous-ensemble respectivement actuel, un niveau de bruit ($R_{rk}$) du spectre de fréquence est déterminé, et le seuil de détection (T) est réglé en fonction du niveau de bruit (Rrk),

   dans lequel, pour le réglage du seuil de détection (T) pour le sous-ensemble actuel, le niveau de bruit ($R_{rk}$) est déterminé à partir de compartiments de fréquence (R) de cellules de résolution Doppler (m) voisines du spectre de fréquence.

2. Procédé selon la revendication 1, **caractérisé en ce que** pour le réglage du seuil de détection (T) pour le sous-ensemble actuel, le niveau de bruit ($R_{rk}$) est déterminé à partir de compartiments de fréquence (R) de cycles de mesure (i) antérieurs.

3. Procédé selon la revendication 1 ou 2, **caractérisé en ce que** dans chaque cycle de mesure (i), le seuil de détection (T) est réglé individuellement pour chaque cellule de résolution en distance (k).

4. Procédé selon l'une quelconque des revendications précédentes, **caractérisé en ce que** pour le réglage du seuil de détection (T) pour le sous-ensemble respectivement actuel, le niveau de bruit ($R_{rk}$) est déterminé à partir de compartiments de fréquence (R) de cellules de résolution Doppler (m) voisines provenant de la même cellule de résolution en distance (k).

**5.** Procédé selon la revendication 2, **caractérisé en ce que** pour le réglage du seuil de détection (T) pour le sous-ensemble respectivement actuel, le niveau de bruit ($R_{rk}$) est déterminé à partir de compartiments de fréquence (R) de la même cellule de résolution en distance (k) de cycles de mesure (i) antérieurs.

**6.** Procédé selon l'une quelconque des revendications précédentes, **caractérisé en ce que** la détermination du niveau de bruit ($R_{rk}$) est effectuée uniquement pour une zone de proximité ($N_{near}$) du capteur radar (5, 6).

**7.** Procédé selon l'une quelconque des revendications 1 à 5, **caractérisé en ce que** la détermination du niveau de bruit ($R_{rk}$) est effectuée pour toutes les cellules de résolution en distance (k).

**8.** Procédé selon la revendication 2, **caractérisé en ce que** pour le réglage du seuil de détection (T) pour le sous-ensemble respectivement actuel, le niveau de bruit ($R_{rk}$) est déterminé par un filtrage, en particulier par un calcul de la moyenne, des compartiments de fréquence (R) de la même cellule de résolution en distance (k) à partir d'une pluralité prédéterminée de cycles de mesure (i) directement antérieurs.

**9.** Procédé selon la revendication 2, **caractérisé en ce que** pour la détermination du niveau de bruit ($R_{rk}$) pour le sous-ensemble actuel sont utilisés uniquement des compartiments de fréquence (R) provenant des cycles de mesure (i) précédents pour lesquels, dans ladite au moins une cellule de résolution en distance (k) du sous-ensemble actuel, aucun écho cible provenant d'une cible n'a été détecté.

**10.** Procédé selon la revendication 9, **caractérisé en ce que** pour vérifier s'il existe un écho de cible dans ladite au moins une cellule de résolution en distance (k), un seuil auxiliaire est défini pour le compartiment de fréquence (R) de cette cellule de résolution en distance (k) en fonction d'un niveau de bruit estimé ($R_{rk}$) qui est déterminé en fonction de compartiments de fréquence (R) d'une pluralité de cellules de résolution en distance (k) à l'intérieur d'un cycle de mesure (i).

**11.** Procédé selon l'une quelconque des revendications précédentes, **caractérisé en ce que** pour le réglage du seuil de détection (T), pour ledit au moins un compartiment de fréquence (R), le niveau de bruit ($R_{rk}$) est déterminé en fonction de compartiments de fréquence (R) à partir d'une pluralité de cellules de résolution Doppler (m) provenant au moins de la même cellule de résolution en distance (k).

**12.** Procédé selon l'une quelconque des revendications précédentes, **caractérisé en ce que** pour le réglage du seuil de détection (T), pour ledit au moins un compartiment de fréquence (R), le niveau de bruit ($R_{rk}$) est déterminé en fonction de compartiments de fréquence (R) parmi une pluralité de cellules de résolution Doppler (m) provenant d'au moins une cellule de résolution en distance (k) directement voisine.

**13.** Procédé selon l'une quelconque des revendications précédentes, **caractérisé en ce que** la détermination du niveau de bruit ($R_{rk}$) pour le réglage du seuil de détection (T) pour le sous-ensemble respectivement actuel comprend le fait que les compartiments de fréquence (R) sont soumis à un filtre médian permettant de sélectionner, selon un critère de sélection prédéfini, l'un des compartiments de fréquence (R) comme le niveau de bruit ($R_{rk}$).

**14.** Capteur radar à onde continue modulée en fréquence (5, 6) pour un véhicule automobile (1), le capteur radar (5, 6) étant réalisé pour exécuter un procédé selon l'une quelconque des revendications précédentes.

**15.** Véhicule automobile (1) comprenant un capteur radar (5, 6) selon la revendication 14.

Fig.1

EP 2 936 196 B1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009057191 A1
- US 20110163909 A
- US 5633642 A
- EP 0642190 A1
- US 5508706 A
- US 5929802 A
- US 20070103360 A1